# EUROPÄISCHE PATENTANMELDUNG

(11) **EP 1 026 614 A1**
(43) Veröffentlichungstag der Anmeldung: **09.08.2000**
(21) Anmeldenummer: 99811201.5
(22) Anmeldetag: 23.12.1999
(51) Int. Cl.: G06F 17/60

(54) **Anwenderstrukturierbares Verfahren zm Ordnen von Daten**

(30) Priorität: 23.12.1998 CH 254398
(71) Anmelder: apps4biz.com Holding AG, 6300 Zug (CH)
(72) Erfinder: Monbaron, Jean-Jacques, 2046 Fontaines (CH)
(74) Vertreter: Frei, Alexandra Sarah

(57) **Zusammenfassung**

Das Verfahren zum Ordnen von Daten verwendet eine Prä-Strukturierung eines universellen (bspw. Verwaltungs-) Schemas entsprechend einem vorgegebenen Arbeitsablauf (Work-Flow) zur Verwaltung von Daten ausgehend von einer universellen Grundstruktur, in welche die Prä-Strukturierung eingeprägt wird. Die Anwender-Software bildet Module, die über Schnittstellen an diese dem betrieblichen Work-Flow entsprechenden Struktur ankoppelbar sind. Auf diese Weise verfügt man über ein Mittel zur universellen Gestaltung und Nachbildung irgendwelcher Arbeitsabläufe irgend eines Betriebes bzw. dessen Work-Flow. Dadurch muss sich ein Betrieb nicht einem erzwungenen Ablauf einer Software anpassen oder gar unterwerfen sondern kann den Informationsfluss durch die vorgeprägte Struktur gezielt den eigenen Anforderungen anpassen. Das Verfahren beruht auf der Verwendung eines neutralen, universell verwendbaren Grundschemas, das als "universeller datenverarbeitender Motor" bezeichnet werden kann, deswegen, weil dieses Grundschema die Datenflüsse innerhalb des zwischen einer Mehrzahl von Standardsoftware zu übertragen fähig ist; das System wird von diesem zentralen Teil buchstäblich angetrieben. Dieser universelle Datenmotor ist eine Prozedur, welche zwischen unabhängig voneinander funktionierenden Systemen wie Datenbanken, Textverarbeitung, Tabellenkalkulation, Buchhaltung, graphischen Auswertungen etc. kommunizieren und Daten transportieren kann. Der Datenmotor hat die Eigenschaft, nach einem bestimmten, ihm eingeprägten Arbeitsablauf oder "Workflow-Schema", als betriebsgeprägter (konditionierter) Datenmotor arbeiten zu können. Das Besondere an diesem Datenmotor ist, dass er nicht einem fest vorgegebenen Arbeitsablauf nachgestaltet wird, sondern dass ihm beliebige Arbeitsabläufe reversibel eingeprägt werden können, ohne dass dabei der Datenmotor selbst verändert werden muss.

## Beschreibung

Die Erfindung betrifft ein Verfahren für einen individualisierbar prästrukturierten Arbeitsablauf zum Ordnen von Daten, ein Verfahren zur Erstellung einer allgemeinen Datenstruktur und diese Datenstruktur selbst, ein Verfahren zur Erstellung einer Datenstruktur von Steuerungsmodi zu Ordnen von Daten sowie ein Computerprogrammprodukt, mit dem diese Verfahren ausführbar sind.

Schon in kleinen Betrieben müssen grosse Mengen von Daten bewältigt werden. Solche Daten betreffen z. B. Artikel, Adressen, Dokumente oder Abläufe; sie werden für verschiedene Aufgaben wie z. B. Betriebsführung, Diagnostik oder technische Geräteführung in Bereichen wie Buchhaltung, Marketing, Lagerbewirtschaftung, Produktionsplanung etc. benötigt. Diese Daten werden in Datenbanken gespeichert und mit Computerprogrammen verarbeitet bzw. verwaltet.

Verfahren zum Ordnen und zum Verwalten von Daten mit Hilfe Computerprogrammen in einem Betrieb sind an sich bekannt, weisen aber folgende Nachteile auf:
- Die bekannten Verwaltungsprogramme wie SAP oder Baan™ haben eine vorgegebene Struktur, welche den Datenfluss bestimmt. Anpassungen an individuelle Bedürfnisse eines Betriebs oder an betriebliche Entwicklungen können gar nicht oder nur mit grossem Programieraufwand vorgenommen werden. Solche Programme sind deshalb unflexibel und wenig anwenderfreundlich. Insbesondere zwingen sie einem Betrieb eine spezifische Vorgehensweise auf, die aber in der Regel nicht optimal den Anforderungen und schon gar nicht dem betriebsspezifischen Work-Flow entspricht.
- Die bekannten Verwaltungsprogramme bieten branchen- oder produktespezifische Lösungen. Sie sind kaum universell anwendbar.
- Auch innerhalb eines Betriebes werden oft mehrere unterschiedliche, auf entsprechende Bereiche spezialisierte Programme eingesetzt, so ein Buchhaltungsprogramm, ein Lagerbewirtschaftungsprogramm, ein Adressverwaltungsprogramm und andere mehr. Deshalb müssen die betroffenen Mitarbeiter teilweise mehrere Programme bedienen lernen, was mit hohem Schulungsaufwand verbunden ist. Eine Datenübergabe von einem Programm zu einem anderen ist kompliziert und unsicher.
- Entscheidungsrelevante Informationen für Führungskräfte sind meist nur über ein wiederum spezielles Informationsverarbeitungsprogramm (EIS = executive information system) abrufbar, welches seinerseits vom ganzen Pool der übrigen Betriebssoftware getrennt ist und keine Verzahnung und keinen Durchgriff ermöglicht. In vielen Fällen ist gar kein EIS-Programm vorhanden, so dass die Informationen aus verschiedenen Quellen gesammelt und aufbereitet werden müssen und dadurch zeitlich nachhinken mit andern Worten nicht mehr aktuell sind.
- Einmal vorgenommene Eingaben von Daten können nur mit grossem Aufwand wieder rückgängig gemacht werden. Dies verunmöglicht das Rückverfolgen von vergangenen oder die Simulation von zukünftigen Ereignissen.
- Bekannte Verwaltungsprogramme sind oftmals wenn nicht gar in der Regel auf die Verarbeitung zweidimensionaler Tabellen beschränkt.

Ein universelles Verwaltungsverfahren ist beispielsweise aus der Patentschrift EP-0 209 907 bekannt. Mit dieser Erfindung sollen verschiedene und unabhängig durchgeführte Management- und Verwaltungsarten miteinander verbunden und die Eingabe der Daten, das Speichern und die weitere Verarbeitung der Eingabedaten verbessert werden. Um dies zu erreichen, sieht dieses einen gemeinsamen Transferabschnitt, der auch als User-Interface bezeichnet werden kann, für alle unabhängig voneinander ablaufenden Tätigkeiten vor. Ferner sieht es verschiedene zusätzliche Dateien und Verarbeitungseinheiten vor, welche das Handling dieser Dateien steuern, vor. Durch einen solchen gemeinsamen Transferabschnitt wird wohl eine Art ,Beobachtungs- bzw. Durchgangspunkt' für die Datenflüsse geschaffen, nur dass ein Flaschenhals dieser Art den Gesamtprozess zeitlich einschränkt.

Es ist Aufgabe der Erfindung, ein Verfahren zum Ordnen von Daten anzugeben, welches die obigen Nachteile nicht aufweist. Dieses Verfahren verwendet eine Prä-Strukturierung eines universellen (bspw. Ordnungs-) Schemas entsprechend einem vorgegebenen Arbeitsablauf (Work-Flow) zur Verwaltung von Daten, ausgehend von einer universellen Grundstruktur, in welche die Prä-Strukturierung eingeprägt wird. Die Anwender-Software bildet Module, die über Schnittstellen an diese dem betrieblichen Work-Flow entsprechenden Struktur ankoppelbar sind.

Auf diese Weise wird die Aufgabe in zweifacher Hinsicht gelöst: einerseits umgeht man die oben genannten Nachteile und andererseits verfügt man über ein Mittel zur universellen Gestaltung und Nachbildung irgendwelcher Arbeitsabläufe irgend eines Betriebes bzw. dessen Work-Flow. Dadurch muss sich ein Betrieb nicht einem erzwungenen Ablauf einer Software anpassen oder gar unterwerfen, sondern kann den Informationsfluss durch die vorgeprägte Struktur gezielt den eigenen Anforderungen anpassen.

Das erfindungsgemässe Verfahren beruht, wie oben schon angedeutet, auf der Verwendung eines neutralen, universell verwendbaren Grundschemas, das als "universeller datenverarbeitender Motor" bezeichnet werden kann, deswegen, weil dieses Grundschema die Datenflüsse innerhalb des Systems zwischen einer Mehrzahl von Standardsoftware zu übertragen fähig ist; das verbundene Software-System wird von diesem zentralen Teil buchstäblich angetrieben. Dieser universelle Datenmotor ist eine Prozedur, welche zwischen unabhängig voneinander funktionierenden Sub-Systemen wie Datenbanken, Textverarbeitung, Tabellenkalkulation, Buchhaltung, graphischen Auswertungen etc. kommunizieren und Daten transportieren kann. Der Datenmotor hat die Eigenschaft, nach einem bestimmten, ihm eingeprägten Arbeitsablauf oder "Workflow-Schema" als "betriebsgeprägter (konditionierter) Datenmotor" arbeiten zu können. Das Besondere an diesem Datenmotor ist, dass er nicht einem fest vorgegebenen Arbeitsablauf nachgestaltet wird, sondern dass ihm beliebige Arbeitsabläufe reversibel eingeprägt werden können, ohne dass dabei der Datenmotor selbst verändert werden muss.

Die Idee, eine solche frei konfigurierbare Struktur als Datenmotor zu verwenden, entstammt der Analogie des elektrischen Universalsubstrats. Ein Universalsubstrat ist im wesentlichen eine Leiterplatte mit einer Vielzahl von bspw. rasterartig und auf mehreren Ebenen angeordneten Leiterbahnen, die über, nach bestimmten Mustern angelegten, elektrische Verbindungsstellen die Verbindung von Leiterbahnen erlaubt. Durch planmässiges Bestücken der Universalschaltung mit elektrischen und/oder elektronischen Bauteilen wie Leitern, Widerständen, Kondensatoren, Transistoren etc. sowie durch planmässiges Verbinden dieser Bauteile und/oder Unterbrechen der Verbindungen kann beinahe jede beliebige elektrische Schaltung aufgebaut werden. Dabei ist ein solcher Aufbau flexibel und reversibel in dem Sinne, dass er jederzeit vollständig oder auch nur teilweise aufgehoben bzw. ergänzt werden kann. Elektrische Universalsubstrate werden vorzugsweise für Prototypen und Kleinserien von elektrischen Schaltungen verwendet.

Analog zum Universalsubstrat stellt der erfindungsgemässe Datenmotor zunächst eine universelle Plattform zum Aufbau von bestimmten Arbeitsabläufen dar. Mit anderen Worten: Der Datenmotor ist ein universelles Prozedurmodul, welchem von einem bis zu einer Vielzahl dem jeweiligen Anwendungsgebiet angepassten bzw. angepasste Arbeitsablauf bzw. Arbeitsabläufe einprägbar ist. Dem Stromfluss in einem bestückten elektrischen Universalsubstrat entspricht ein Datenfluss im konfigurierten Datenmotor und der Bestückung eines Universalsubstrats mit aktiven Komponenten entsprechen die aktivierten Regeln und Verknüpfungen im konfigurierten Datenmotor, wobei nicht verwendungsfähige Regeln und Verknüpfungen inaktiv bleiben.

Der Datenmotor besteht vorzugsweise aus einem vernetzten Satz von Baum-, Graphen- oder anderen Strukturen, welcher eine Hyperstruktur bildet. Die Hyperstruktur bildet ein geschlossenes und auch gegen Manipulation geschütztes Sub-System und ist als solches dem Operating nicht zugänglich. An diese Hyperstruktur bzw. an den Datenmotor können Module angekoppelt werden, die den durch den Datenmotor erzeugten Datenfluss nähren (Dateneingabemodule), bewahren (Datenbanken) oder ausgeben (Datenausgabemodule). Solche Module können bekannte Standardsoftwareprodukte sein, z. B. Microsoft®Access als Datenbank, Microsoft®Word als Textverarbeitung, Microsoft®Project für grafische Darstellungen oder aber, falls gewünscht, auch proprietäre Software. Der Vorteil vom Einsatz von Standardsoftware liegt jedoch in der Bedienbarkeit durch den Benutzer, der mit dieser Art von Software schon vertraut ist, weswegen bevorzugt solche Software als Module eingesetzt werden, die schon eine gewisse Verbreitung haben.

Eingegebene Daten laufen dann vom Eingabemodul über prä-strukturierte Pfade der Work-Flow-Struktur, die dem betrieblichen Arbeitsablauf entspricht, in eine oder mehrere Datenbanken; auszugebende Daten laufen von den Datenbanken durch dieselbe Struktur auf anderen Pfaden zum Ausgabemodul, wo sie zur Weiterverwertung bereitstehen. Die Ankopplung der Module an den Datenmotor erfolgt über Ein- und/oder Ausgangsschnittstellen (Interfaces).

Die Hyperstruktur des Datenmotors wird vorzugsweise mittels der Technik der Graph-Struktur bewerkstelligt, d. h. mittels einer Konfiguration von Punkten (Ecken) und sie verbindenden Kurven (Kanten). Die Punkte entsprechen dabei Daten bzw. Dateien, die Kurven oder Verknüpfungen entsprechen konfigurierbaren Operatoren zwischen den Daten bzw. Dateien. Bei der Konfiguration des Datenmotors werden die gewünschten Verknüpfungen aus der Menge aller möglichen Verknüpfungen spezifisch ausgewählt bzw. festgelegt und ihre Eigenschaften definiert; wie dies bspw. bei der Beschaltung eines elektrischen Universalsubstrats durchgeführt wird. Analog zu den elektrischen Schaltungen auf einem Universalsubstrat ist es denkbar, dass mehrere "Schaltungen", hier sind es Pfade mit Regeln und Verknüpfungen, eine identische Funktionsweise haben können.

Für das Management bzw. für den Work-Flow, also ein Abbild des tätigen Betriebes, werden vorzugsweise ISO 9000 Prozeduren verwendet. Die neutrale, universelle Struktur des Datenmotors besteht aus ungefähr 100 Regeln und deren Verknüpfungspotential, auf die noch weiter unten eingegangen wird. Als Beispiel sei genannt, dass zur Darstellung eines Workflows mittels Baan™ etwa 10'000 Regeln zum Einsatz kommen; mittels Miracle™ sind es ebenfalls um die 10'000 Regeln. Dies rührt daher, dass zur Erfassung eines Workflows stets eine zu feine Granularität, das heisst, ein hoher Prozentsatz unverknüpfter Regeln innerhalb der einzusetzenden Regelsätze verwendet wird. Es ist klar, dass dadurch solch eine "feine" Struktur recht schwerfällig und nicht mehr überblickbar wird. Vom Angebot der etwa 100 im Datenmotor zur freien Verknüpfung bereitgehaltenen Regeln wird zur Darstellung des Work-Flows eines Betriebes von diesen Regeln durch adäquate Verknüpfung, also Aktivierung, Gebrauch gemacht. Selbstverständlich würden auch 150 oder 200 Regeln die Granularität im Vergleich zu 10'000 nicht erhöhen, so dass man auch auf der Ebene der Anwendung der Regeln mittels Verknüpfung einen grossen Vorteil erzielen kann.

Im folgenden wird die Erfindung anhand von Figuren detailliert erläutert.
- Fig. 1: zeigt ein einfaches Schema eines 'lockeren' Systems von verschiedener Betriebssoftware, Datenbank- und Auswerteprogrammen für Daten ohne Vernetzung deren Tätigkeit.
- Fig. 2: zeigt ein abstrahiertes Schema einer herkömmlichen Datenbank mit 2-dimensionalen Tabellenstruktur mit Zellen für Daten und Regeln.
- Fig. 3a) und 3b): zeigen Beispiele von Strukturen, wie sie im Datenmotor eingesetzt werden können.
- Fig. 4: zeigt das Beispiel eines Betriebsablaufes, hier als Work-Flow bezeichnet.
- Fig. 5: zeigt eine andere Darstellung des Work-Flows von Fig. 4.
- Fig. 6: zeigt eine Tabelle mit Abläufen.
- Fig. 7: zeigt eine Tabelle mit Verknüpfungen von Abläufen.
- Fig. 8: zeigt ein abstraktes Schema eines Beispieles für eine individuell geprägte Hyperstruktur des Datenmotors.

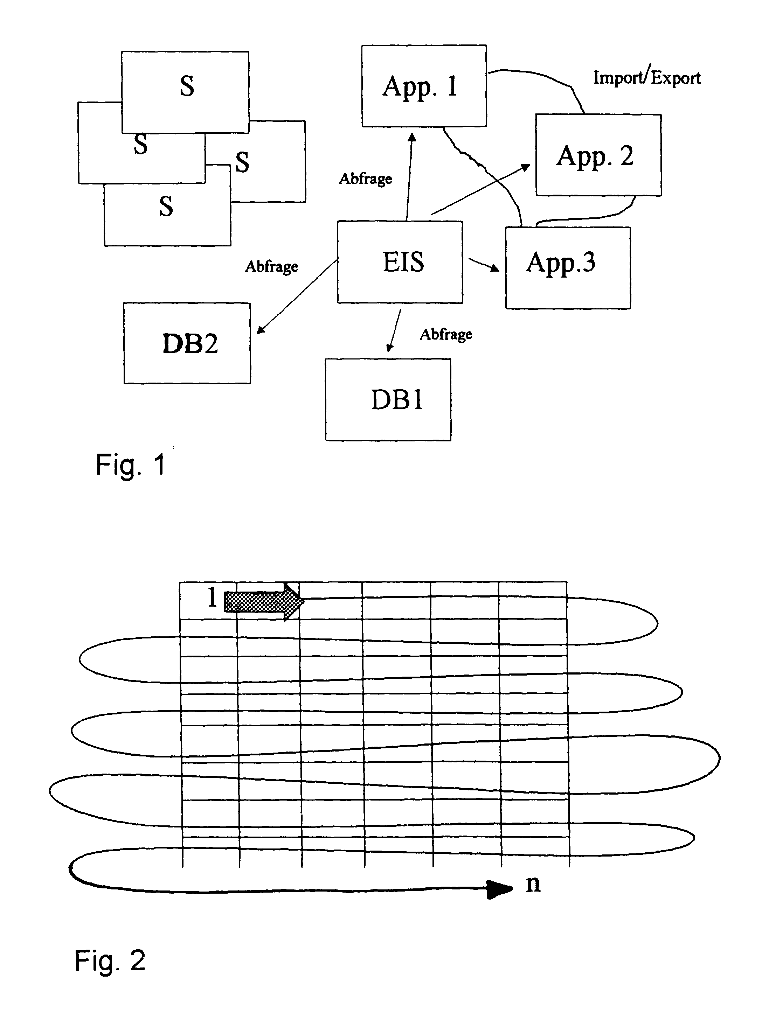

Nebst dem zentralen Datenmotor ist die Datenbank ein wichtiges Element der Gesamtstruktur. Die verwendete Datenbank sollte EIS-tauglich sein (EIS = executive information system). Das EIS fungiert sozusagen als Cockpit des Gesamtsystems. **Figur 1** zeigt als ein Element das EIS und als weitere Elemente die Varietät der Betriebssoftware. Bis anhin sind diese beiden Grundelemente EIS und Betriebssoftware softwaremässig stets getrennt verwendet worden, während in der Erfindung die Betriebssoftware (untereinander) und das EIS miteinander zu einer Einheit verbunden sind. Daraus resultiert folgendes: Es ist nicht mehr nötig, menüorientiert zu programmieren und zu arbeiten; das EIS ist so strukturiert, dass es nur auf eine ausgewählte Anzahl Strukturbefehle, bspw. "Art des Objektes", "Adressat", "Dokumente", "Journal" reagiert und bspw. Befehle wie "Artikel erfassen" oder "Löschen" nicht vorkommen. Die einzelnen Entitäten der Betriebssoftware und das EIS sind über den Datenmotor workflowmässig miteinander vernetzt. In der Darstellung gemäss Figur 1 ist bspw. der Softwarebestand einer Firma eingezeichnet, wie er täglich benützt wird. Es sind drei hauptsächlich verwendete Applikationen App.1, App.2 und App.3 dargestellt, die bspw. den Standardsoftware Excel®, Word® und Access® entsprechen, die miteinander über eine Zwischenablage und über Import/Export Daten austauschen können. DB1 und DB2 sind zwei verschiedene Datenbanken im Fileserver, die untereinander keine Kommunikationsmöglichkeit haben. Mit S sind weitere Softwares innerhalb einer Firma bezeichnet, die nicht zum "inneren" System gehören aber dennoch Daten produzieren. Diese Form eines Systems von locker und wenig planmässig verbundenen Softwareeinheiten ist in Firmen eher die Regel als die Ausnahme.

**Figur 2** zeigt ein Schema einer herkömmlichen Datenbank wie bspw. das frühe Visicalc, die eine 2-dimensionale Anordnung von Daten- und Verknüpfungsfeldern aufweist, wie sie auch heute noch üblich ist, beispielsweise in Excel. Bei einer solchen Organisation von Daten und Verknüpfungen wird bei einer Berechnung jede Zelle geladen und in die Berechnung einbezogen, was bei grossen Datenbanken zu langen Reaktionszeiten führt, da zum Teil unnötigerweise alle Zellen (auch die während des Vorgangs nicht veränderten) von 1 bis n geprüft werden. Allerdings ist eine solche Organisation für alles geeignet, was mit Tabellen zu tun hat, jedoch ist diese Art Organisation bzw. Anordnung für die Organisation eines Datenmotors, wie ihn die Erfindung voraussetzt, nicht geeignet, da sie einen sehr starren, in der Regel nicht modifizierbaren und untransparenten Aufbau aufweist. Insbesondere ist eine solche 2dimesionale Anordnung beispielsweise nicht geeignet, einen zeitlichen Verlauf, welcher eine weitere Dimension erfordert, zu speichern.

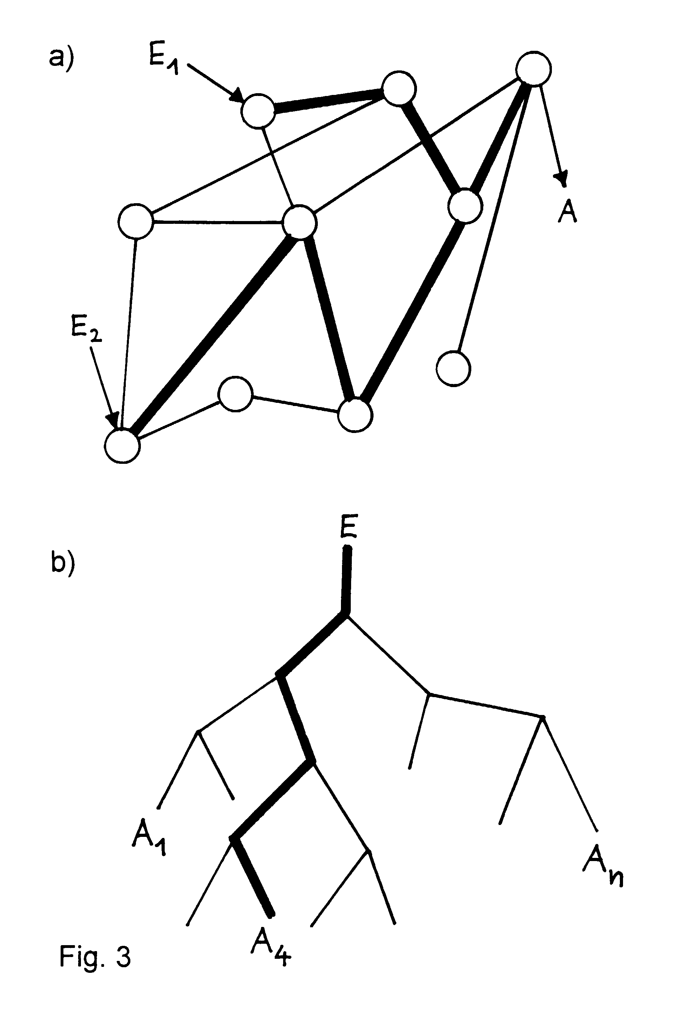

**Figuren 3a) und 3b)** zeigen Strukturen, wie sie adäquaterweise in einem Datenmotor verwendet werden. Vor der gezeigten Baumstruktur wird der Graphenstruktur Vorzug gegeben. Hier ist ein Beispiel eines 3-dimensionalen Graphen gezeigt, der natürlich auch höher dimensioniert sein kann, was allerdings zeichnerisch nicht mehr so leicht darstellbar ist. Als gutes Beispiel für die möglichen Graphen seien Verknüpfungen, wie sie in einem neuronalen Netzwerk vorkommen, erwähnt. Im Graph sind Punkte (oder Ecken) und verbindende Kurven (oder Kanten, Linien) und je eine weitere Anzahl von Kurven, die andere Punkte verbinden, eingezeichnet. Die Punkte repräsentieren hier je einen Ablauf, ein Ereignis, eine Operation, eine Transaktion, ein Prozesselement und/oder ein Dokument und sind über Kurven verknüpft. Nun ist es nicht so, dass lediglich die Verknüpfungen bzw. Kurven zu Punkten eine funktionale Wirkung aufweisen, sondern die Punkte selber haben dies auch: Es bestehen zwei Hauptmengen (bspw. Tabellen), eine über die Eigenschaften von Verknüpfungen und eine über die Eigenschaften von Punkten, was weiter unten noch diskutiert wird. Das heisst, die Eigenschaften von Dokumenten können Eigenschaften der Verbindungen beeinflussen und vice versa. Die Graphenstruktur zeigt hier zwei Eingänge E1 und E2 und einen Ausgang A sowie zwei zwischen den Eingängen und dem Ausgang bevorzugte Pfade, hervorgehoben durch verstärkte Linien, die bspw. einem eingeprägten Work-Flow entsprechen.

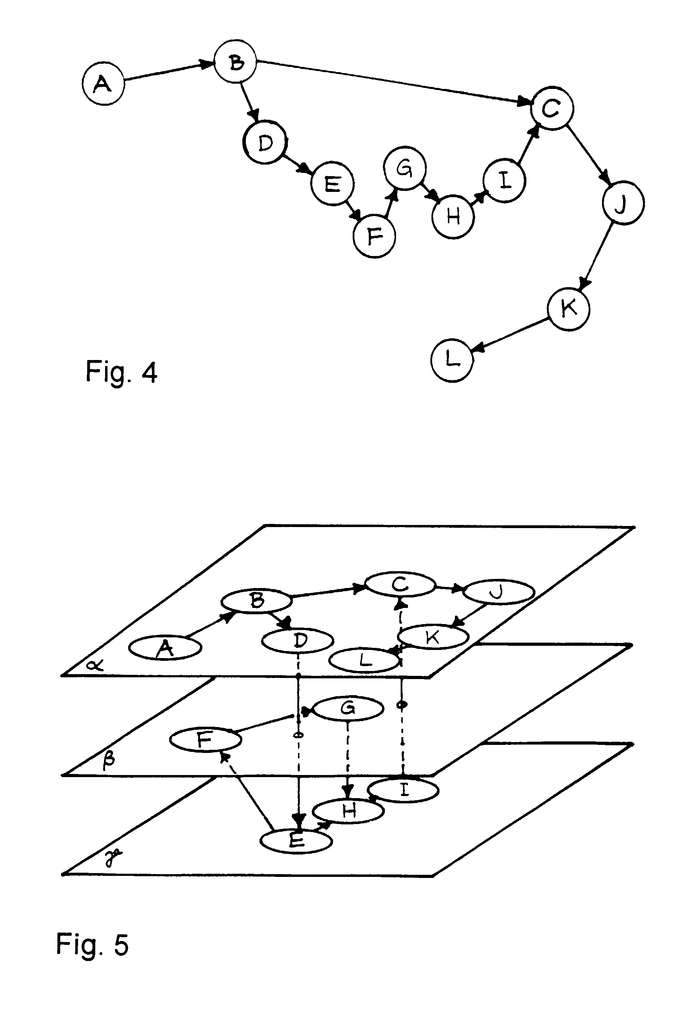

**Figur 4** zeigt ein Beispiel eines möglichen, sehr vereinfachten Work-Flows. Die Elemente A bis G beschreiben typische Abläufe in einem Betrieb, so zum Beispiel:
- A =: Offerte an den Kunden
- B =: Bestellung des Kunden
- C =: Lieferung der Ware an den Kunden (noch pendent).

Nun muss die Ware natürlich auch vorhanden sein, bevor man sie gemäss C liefern kann. Entweder muss man sie herstellen oder man kann sie bei Dritten kaufen, um sie weiterzuverkaufen. So läuft parallel zu B, C folgendes ab:
- D =: Fertigungsauftrag an die Produktion
- E =: Materialbestellung an das Lager
- F =: Zusammenstellung der benötigten Teile
- G =: Lagerausgang
- H =: Fertigung der Ware durch die Produktion
- I =: Fertigungsende.

Und nun kann das pendente C ausgeführt werden und der Prozess geht weiter:
- J =: Lieferung an den Kunden
- K =: Rechnungsstellung an den Kunden
- L =: Überwachung der Bezahlung durch den Kunden.

Es ist klar, dass schon in einem kleinen Betrieb das Workflow-Schema viel komplizierter ist, wie da wäre, die Lagerüberwachung, Ein- und Ausgang von Materialien, Einkauf von Bestandteilen etc.

An dieser Stelle sei auf grundlegende Unterschiede zwischen dem erfindungsgemässen Datenmotor, wie er schematisch in den Fig. 3a, 3b und 4 dargestellt ist, und dem Stand der Technik hingewiesen. Bekannte Verwaltungsprogramme lassen sich am besten als Flussdiagramme mit logischen Entscheidungen ("Ist eine Kostenanfrage eingetroffen?"), Anweisungen ("Offerte ausdrucken!") etc. darstellen. Eine solche Struktur ist individuell, starr und unflexibel; in der technischen Analogie entspricht sie einer auf eine Leiterplatte gedruckten elektrischen Schaltung. Viel vorteilhafter ist dagegen der erfindungsgemässe Datenmotor mit seiner Graphen- oder Baumstruktur. Die Punkte sind in praktisch jedem Betrieb "natürlich vorkommende" Abläufe, Dokumente etc. Der Datenmotor wird durch Verknüpfen der Punkte konfiguriert. Dies ergibt eine universellere, anpassbare und flexible Struktur, deren technische Analogie ein elektrisches Universalsubstrat ist.

Der erfindungsgemässe Datenmotor weist ausserdem den Vorteil einer grossen Granularität und der daraus folgenden Einfachheit und Überblickbarkeit auf. Da die Punkte den tatsächlich in Betrieben vorkommenden Abläufen, Dokumenten etc. entsprechen, liegt ihre Anzahl typischerweise in der Grössenordnung von 100. Nun gäbe es, rein kombinatorisch betrachtet, zwischen ca. 100 Punkten ca. 5'000 mögliche Verknüpfungen; davon sind aber in der Praxis nur wenige wirklich sinnvoll. Nur sinnvolle Verknüpfungen werden bei der Konfiguration des erfindungsgemässen Datenmotors erstellt, die übrigen nicht. Die Erfahrung zeigt, dass viele Verknüpfungen für alle Betriebe, einige Verknüpfungen für wenige Betriebe und wenige Verknüpfungen für nur einen Betrieb brauchbar sind. Mit typischerweise einigen Dutzend bis wenigen Hundert Verknüpfungen kann also ein Datenmotor erstellt werden, welcher für einen Grossteil von Betrieben brauchbar ist. Durch Hinzufügen oder Entfernen von einigen wenigen Verknüpfungen kann individuellen Bedürfnissen und Wünschen einzelner Betriebe Rechnung getragen werden.

In **Figur 5** ist der Work-Flow von Fig. 4 in einer anderen, verfeinerten Darstellung gezeigt. In den meisten Betrieben lassen sich die Prozesselemente ("Punkte") unterschiedlichen organisatorischen bzw. hierarchischen Ebenen α, β, γ zuordnen, z. B.:
- α =: "Verkauft",
- β =: "Lager" und
- γ =: "Produktion".

So entsteht ein dreidimensionaler Work-Flow mit Verknüpfungen in den verschiedenen xy-Ebenen und in z-Richtung. Diese Darstellung verdeutlicht die technische Analogie des erfindungsgemässen Datenmotors mit einem elektrischen Universalsubstrat. Auch in letzterem können die elektrischen und/oder elektronischen Bauteile auf mehreren Ebenen angeordnet sein; elektrische Verbindungen können sowohl in einer Ebene (xy) als auch zwischen zwei Ebenen (z) hergestellt werden.

Figur 5 hebt einen weiteren Vorteil der Erfindung hervor. Der erfindungsgemässe Datenmotor löst alle Aufgaben eines Betriebs, ist also sowohl in der Verkaufs-, der Lager- als auch der Produktionsabteilung einsetzbar. Mitarbeiter aller Stufen im Betrieb können den Datenmotor nutzen. Demzufolge ergibt sich eine Verringerung der Anschaffungs- und Wartungskosten sowie des Schulungsaufwandes, eine bessere Übersichtlichkeit und die Möglichkeit einer zentralen Kontrolle des ganzen Betriebs (EIS). Bisher wurden hingegen in einem Betrieb mehrere unterschiedliche Programme eingesetzt, so bspw. ein Buchhaltungsprogramm, ein Lagerverwaltungsprogramm etc.

Durch die Möglichkeit, die Abläufe in einem Betrieb abzubilden, ergibt sich auch eine Rückverfolgbarkeit aller durch den Datenmotor ausgeführten Vorgänge. Vorzugsweise werden alle wesentlichen Work-Flows und ihre Resultate gespeichert. Dank einer solchen implementierten Gedächtnisfunktion kann das System einerseits zur Erfassung und Ausführung aktueller Betriebsabläufe, andererseits auch zur Simulation und Planung zukünftiger Schritte verwendet werden. So können auch gezielt mögliche Veränderungen und Anpassungen simuliert und deren Auswirkung zu studiert werden; die Rückverfolgbarkeit bringt auch Vorhersehbarkeit mit sich.

Eine beispielhafte Regelnstruktur weist Abläufe (Ereignisse, Operationen, Transaktionen, Prozesselemente und/oder Dokumente) und Verknüpfungen zwischen Abläufen auf. Die Abläufe entsprechen Punkten, die Verknüpfungen entsprechen Linien einer Graphenstruktur (vgl. Fig. 3a oder 4). Die Regelnstruktur wird durch die Gesamtheit der Abläufe und Verknüpfungen mit ihren Eigenschaften festgelegt. Abläufe und Verknüpfungen werden erfindungsgemäss vorzugsweise als Tabellen dargestellt bzw. gespeichert.

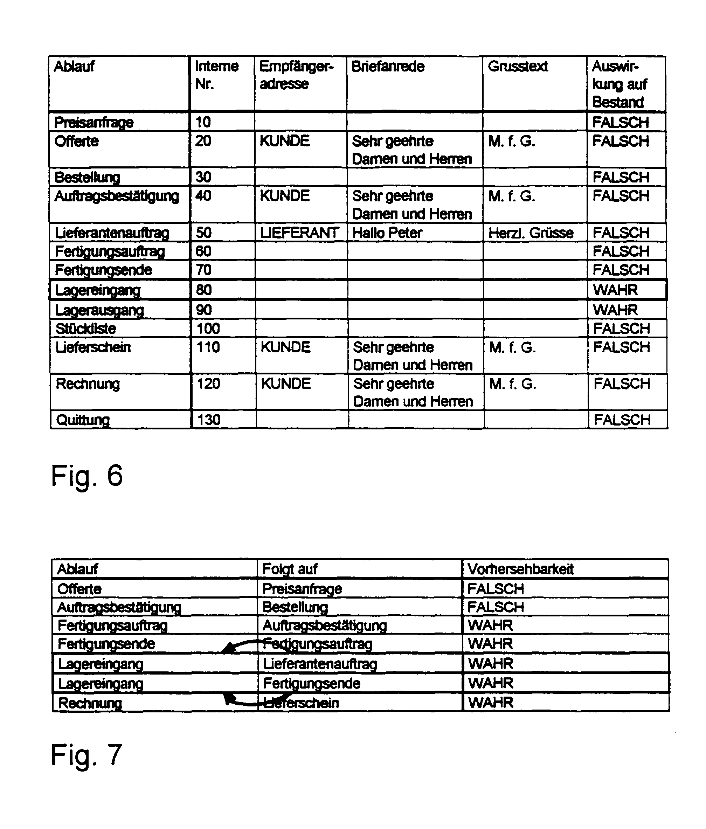

**Figur 6** zeigt eine Tabelle mit Beispielen für Abläufe, wie z. B. Preisanfrage, Offerte, Bestellung, Auftragsbestätigung, Lieferantenauftrag, Fertigungsauftrag, Fertigungsende, Lagereingang, Lagerausgang, Stückliste, Lieferschein, Rechnung, Quittung (vgl. Fig. 6) und viele andere mehr. Einem Ablauf können eine oder mehrere Ablaufeigenschaften zugeordnet werden. Solche Ablaufeigenschaften sind z. B.: interne Nummer, Empfängeradresse, Briefanrede, Grusstext, Auswirkung auf Bestand (wahr/falsch) etc.

Eine Verknüpfung stellt einen eindeutigen zeitlichen Bezug zwischen zwei Abläufen her, bspw. "Eine Offerte wird von einer Preisanfrage ausgelöst" oder "Einem Lieferschein folgt eine Rechnung". Eine Tabelle mit Beispielen für Verknüpfungen ist in **Figur 7** dargestellt. Eine Verknüpfung ist dann hergestellt, wenn sie in der Tabelle steht; nicht in der Tabelle stehende Verknüpfungen sind für den entsprechenden Betrieb nicht nützlich oder nicht sinnvoll. Auch einer Verknüpfung können eine oder mehrere Eigenschaften zugeordnet werden, z. B. Vorhersehbarkeit (wahr/falsch). Ein Ablauf (wie z. B. "Lagereingang") kommt in der Tabelle von Fig. 6 nur einmal vor, in der Tabelle von Fig. 7 ist es aber durchaus möglich, dass ein Ablauf in der Kolonne Nr. 1 "Ablauf" und/oder Nr. 2 "Folgt auf" mehrmals vorkommt.

Bei der Realisierung des erfindungsgemässen Verfahrens auf einem Rechner ist es vorteilhaft, Tabellen wie diejenigen von Fig. 6 und 7 dem Benutzer Ein- und/oder Ausgabegerät, bspw. auf einem Bildschirm, sichtbar und/oder zugänglich zu machen. So kann vorzugsweise weitgehend auf Programmmenüs verzichtet und der Benutzer intuitiv durch das Programm geführt werden. Solche Tabellen sind nämlich beinahe selbsterklärend. Hinter den einzelnen Tabellenfeldern können sich weitere Tabellen verstecken, welche bspw. durch Anklicken des entsprechenden Feldes mit einer Maus geöffnet werden.

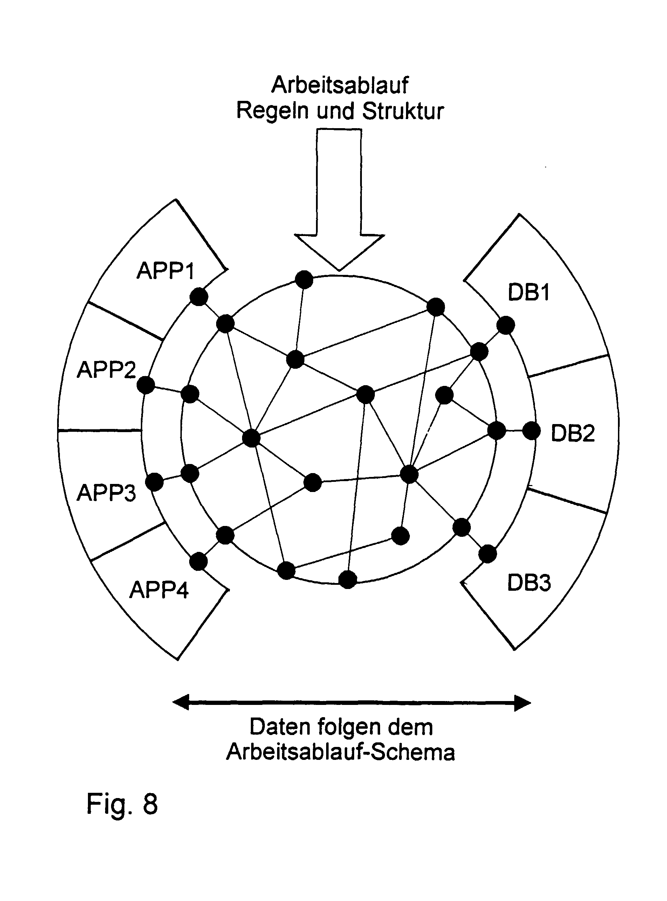

**Figur 8** zeigt nun einen Datenmotor mit seiner "inneren" Struktur und die "angedockten" Module zur Bearbeitung der Datenströme. Dabei ist hervorzuheben, dass der Datenmotor nicht eine starre Struktur im Sinne des Workflows aufweist; er weist vielmehr eine festgelegte Struktur zur Strukturierung oder Einprägung eines Work-Flows auf, und zwar eines ganz beliebigen. Ist der einmal eingeprägt, dann handelt es sich um einen kundenorientierten Datenmotor, der modifizierbar ist, aber durch den normalen Benützer nicht verändert werden kann und auch nicht muss, weil das System nach der Konditionierung wie ein Massanzug sitzt. So kann ein in den Datenmotor eingeprägter Work-Flow mit dem Betrieb, den er abbildet, mitwachsen. Insbesondere lässt sich die innere Struktur des Datenmotors, analog neuronalen Netzwerken, bei Bedarf rekonfigurieren und anpassen, um den sich wandelnden Bedürfnissen und Anforderungen an den Betrieb gerecht zu werden. Da die Graph-Punkte im Datenmotor für weitere Anbindungen offen stehen und auch weitere Punkte eingebracht werden können, kann eine Erweiterung und das zusätzliche Anbinden von Modulen ohne Mehraufwand geschehen. Ein weiterer Vorteil ergibt sich auch aus der Flexibilität der Teilbereiche. Da beliebige zusätzliche Pfade unabhängig voneinander definiert werden können, sind die notwendigen Daten keinen Restriktionen unterworfen. Da effektiv immer nur die Verbindungen aktiv sind, wie sie beispielhaft in Figur 3a dargestellt sind, ist es immer klar ersichtlich, was eine Verbindung bewirkt. Im Gegensatz zu den aus dem Stand der Technik bekannten Datenbanken sind die im erfindungsgemässen Datenmotor definierten und wirksamen Verknüpfungen und deren Wirkung immer auf Anhieb zu erkennen und zu überblicken. Die Verknüpfungen des Datenmotors werden für jeden Betrieb individuell, gemäss dem organisatorischen Aufbau und den Bedürfnissen des Betriebes, definiert und im Datenmotor abgebildet. Dadurch wird erreicht, dass im Gegensatz zu anderen Produkten ein kundenspezifisch optimierter Aufbau garantiert wird.

Im vorliegenden Beispiel sind die Applikationen APP1 bis APP4 Ein- und Ausgabestellen für Daten mit welchen der Benützer arbeitet. Dies sind, wie schon gesagt, Programme aus dem Arsenal der Standardsoftware, vorzugsweise solche, die eine gute Verbreitung erfahren hat. Mit DB1, DB2 und DB3 sind Datenbanken bezeichnet, wie sie in der Regel in einem Netzwerk von File-Servern angeboten werden. Der Benützer hat mit diesen Datenbanken nicht direkt zu tun, sie arbeiten im Hintergrund und werden über die Applikationen bewirtschaftet. Zwischen den Applikationen APP1 bis APP4 und den Datenbanken DB1 bis DB3 arbeitet der Datenmotor mit seiner eingeprägten Struktur, wie das in diesem Beispiel in Form eines freiverzweigten Graphen dargestellt ist. Den Knoten entsprechen Daten und den Verbindungen Regeln. Daten von den Applikationen oder von den Datenbanken werden auf die Knoten geleitet, dort analysiert und je nach Resultat einem bestimmten anderen Knoten zugewiesen, wobei durch die Überweisung stets eine vorgegebene Regel ausgeführt wird. Wie eingangs erwähnt, enthält der Datenmotor um die 100 Regeln eingeprägt. Die Pforte für die Einprägung des Work-Flows bzw. die Programmierung des Datenmotors bzw. die Aktivierung der zuständigen Regeln und Verbindungen ist oben mit einem Eingangspfeil bezeichnet. Unten wird mit einem Doppelpfeil angezeigt, dass die Daten nur dem Work-Flow-Schema, also dem eingegebenen Arbeitsablauf folgen und keinen anderen, nichtaktivierten Pfaden. Dabei könnte ausnahmsweise auch ein nichtaktivierter Pfad aktivierbar sein; nichtaktivierte Pfade können auch explizit verboten werden.

## Patentansprüche

1. Verfahren für einen individualisierbar prästrukturierten Arbeitsablauf (Work-Flow) zum Ordnen von Daten, gekennzeichnet durch die folgenden Verfahrensschritte:
(a) Festlegen eines neutralen, universell verwendbaren Grundschemas;
(b) Auswahl und Prägung eines Arbeitsablaufs;
(c) Definieren mindestens einer Input/Output-Schnittstelle.

2. Verfahren nach Anspruch 1, dadurch gekennzeichnet, dass das Grundschema Platzhalter für Daten und Regeln bzw. Operatoren zwischen den Platzhaltern beinhaltet.

3. Verfahren nach Anspruch 2, dadurch gekennzeichnet, dass das Grundschema eine Graphenstruktur mit Knoten und Verbindungen ist, in welcher die Knoten Platzhalter für durchzuschleusende Daten und die Verbindungen je eine Regel enthalten.

4. Verfahren nach Anspruch 2, dadurch gekennzeichnet, dass das Grundschema eine Baumstruktur mit Verzweigungen und Ästen ist, in welcher die Verzweigung ein Platzhalter für durchzuschleusende Daten und die Äste je eine Regel enthalten.

5. Verfahren nach einem der Ansprüche 2-4, dadurch gekennzeichnet, dass die Auswahl und Prägung eines Arbeitsablaufs durch Auswahl und/oder Festlegung von gewünschten Verknüpfungen aus der Menge aller möglichen Verknüpfungen erfolgt.

6. Verfahren nach einem der vorangehenden Ansprüche, dadurch gekennzeichnet, dass die Schnittstellen derart definiert werden, dass sie Datenaustausch zwischen dem prästrukturierten Arbeitsablauf und mindestens einer Standardsoftware ermöglichen.

7. Verfahren nach Anspruch 6, dadurch gekennzeichnet, dass eine Dateneingabe in den prästrukturierten Arbeitsablauf für die Software des Benützers freigegeben ist und eine Dateneingabe in den prästrukturierten Arbeitsablauf für eine Datenbank reserviert ist und die Datenausgabe aus dem prästrukturierten Arbeitsablauf zur Datenbank sowie zum Benützer erfolgt.

8. Verfahren zur Erstellung einer allgemeinen Datenstruktur, in welche ein Arbeitsablauf zum Ordnen von Daten einprägbar ist, dadurch gekennzeichnet, dass die Struktur aus einem gegebenen Regelsatz mit Platzhaltern für Daten und mit Regeln zwischen den Platzhaltern gebildet und mindestens eine Schnittstelle für einen Datenaustausch mit anderen Programmen vorgesehen wird.

9. Verfahren nach Anspruch 8, dadurch gekennzeichnet, dass die Datenstruktur eine Graphenstruktur mit Knoten und Verbindungen ist, in welcher die Knoten Platzhalter für durchzuschleusende Daten und die Verbindungen je eine Regel enthalten.

10. Verfahren nach Anspruch 8, dadurch gekennzeichnet, dass die Datenstruktur eine Baumstruktur mit Verzweigungen und Ästen ist, in welcher die Verzweigung ein Platzhalter für durchzuschleusende Daten und die Äste je eine Regel enthalten.

11. Verfahren zur Erstellung einer Datenstruktur von Steuerungsmodi zum Ordnen von Daten, dadurch gekennzeichnet, dass eine allgemeine Datenstruktur nach einem der Ansprüche 8-10 erstellt wird und anschliessend aus dem Gesamtsatz der Regeln eine Anzahl für den Zugriff aktiviert und die nichtaktivierten Regeln nichtzugreifbar gemacht oder belassen werden.

12. Verfahren nach Anspruch 11, dadurch gekennzeichnet, dass die aktivierten Regeln einem betrieblichen Arbeitsablauf (Work-Flow) zugehörig sind und die Abfolge der Regeln einen betrieblichen Arbeitsablauf darstellt.

13. Verfahren nach Anspruch 12, dadurch gekennzeichnet, dass ein Arbeitsablauf eines Betriebes analysiert, in einer vorgegebenen Regelfolge festgelegt wird und durch Aktivierung der entsprechenden Regelfolge in die Datenstruktur eingeprägt wird.

14. Datenstruktur, herstellbar mit dem Verfahren nach einem der Ansprüche 8-10, dadurch gekennzeichnet, dass sie einen abgeschlossenen Satz von Regeln und Verknüpfungen aufweist und mindestens eine Schnittstelle für einen Datenaustausch mit anderen Programmen vorgesehen ist.

15. Datenstruktur nach Anspruch 14, dadurch gekennzeichnet, dass die Regeln bzw. deren Verknüpfungen wahlweise aktivierbar oder sperrbar sind.

16. Datenstruktur nach Anspruch 15, dadurch gekennzeichnet, dass die aktivierten Regeln einem betrieblichen Arbeitsablauf entsprechen.

17. Verwendung der Datenstruktur nach einem der Ansprüche 14-16 als Verknüpfüngsstruktur zwischen Anwendersoftware und Datenbanken.

18. Computerprogrammprodukt, das direkt in den internen Speicher eines digitalten Computers ladbar ist und Softwarecodeabschnitte umfasst, mit denen das Verfahren nach einem der Ansprüche 1-7 ausführbar ist, wenn das Produkt auf einem Computer läuft.

19. Computerprogrammprodukt, das auf einem computergeeigneten Medium gespeichert ist und folgendes umfasst:
(a) computerlesbare Programmmittel zum Festlegen eines neutralen, universell verwendbaren Grundschemas;
(b) computerlesbare Programmmittel zur Auswahl und Prägung eines Arbeitsablaufs;
(c) mindestens eine computerlesbare Input/Output-Schnittstelle.
